# EUROPÄISCHE PATENTSCHRIFT

(11) **EP 1 775 172 B1**
(45) Veröffentlichungstag und Bekanntmachung des Hinweises auf die Patenterteilung: **20.10.2010**
(21) Anmeldenummer: 06017852.2
(22) Anmeldetag: 26.08.2006
(51) Int. Cl.: B60R 19/34

(54) **Vorrichtung zur Aufpralldämpfung**
Device for absorbing shocks
Dispositif pour l'absorption des chocs

(30) Priorität: 14.10.2005 DE 102005049149
(43) Veröffentlichungstag der Anmeldung: 18.04.2007
(73) Patentinhaber: GM Global Technology Operations, Inc., Detroit, MI 48265-3000 (US)
(72) Erfinder: Braunbeck, Bardo, 55276 Oppenheim (DE); Hock, Theobald, 63762 Grossostheim (DE)
(74) Vertreter: Daniel, Ulrich W.P.

(56) Entgegenhaltungen:
- EP-A- 0 527 073
- EP-A- 1 504 966
- EP-A- 1 522 464
- WO-A-2004/098956
- DE-A1- 10 350 451

## Beschreibung

Die vorliegende Erfindung betrifft eine Vorrichtung zur Aufpralldämpfung, insbesondere für ein Kraftfahrzeug mit einem Querträger, welcher sich vorzugsweise zwischen einer Stoßfängeraußenhaut und einem Fahrzeugrahmen erstreckt, wobei der Querträger mittels zumindest einem Prallelement am Fahrzeugrahmen angeordnet ist, welcher im Kollisionsfall des Kraftfahrzeuges eine energieabsorbierende Funktion aufweist.

In der WO 2004/098956 A ist beispielsweise ein Stoßdämfer für Lkws und/oder Transportfahrzeuge offenbart, welcher mit Dämpfungsmitteln ausgestattet ist, die in der Lage sind, die schädigenden Auswirkungen von Stößen in axialer Richtung vollständig oder zumindest teilweise zu absorbieren. Um das zu gewährleisten, weist der Stoßdämpfer wenigstens ein Stützteil auf, welches mit einem festen Teil durch mechanische Verbindungsmittel aus Dämpfungsmaterial verbunden ist, wodurch dem Stützteil ermöglicht wird, sich senkrecht in Bezug auf das feste Teil des Stoßdämpfers zu verschieben, indem es seinen Abstand in Bezug auf das feste Teil selbst ändert.

EP-A-1 504 966 zeigt eine Stossfangeranordnung für Kraftfahrzeuge mit mindestens zwei Crashboxen, einem Querteil und mindestens zwei im Wesentlichen unverformbaren Verbindungsvorrichtungen, die zur starren Befestigung des Querteils an dem Fahrzeugrahmen vorgesehen sind, wobei die Verbindungsvorrichtungen einen Körper aufweisen, der entweder einen massiven oder wabenformigen Querschnitt hat.

Vorrichtungen zur Aufpralldämpfung kommen gewöhnlich bei Kraftfahrzeugen zum Einsatz, bei denen die hier betrachtete Vorrichtung vorzugsweise am Heck des Kraftfahrzeuges angeordnet werden kann. Vorrichtungen zur Aufpralldämpfung sind einerseits am mit dem Prallelement in Verbindung stehenden Querträger und andererseits mit dem Fahrzeugrahmen verbunden. Im Fall eines Aufpralls, welcher außenseitig auf den Stoßfänger einwirkt, verhindert die Vorrichtung größere Beschädigungen am Fahrzeugrahmen. Der Fahrzeugrahmen ist mit einer hohen Steifigkeit ausgeführt, so dass die Energieaufnahme eines kleineren Aufpralls nicht durch eine plastische Verformung der Fahrzeugkarosserie erfolgt. Dies wird erreicht, indem der Querträger und/oder Prallelement(e) die Aufprallenergie auf einem niedrigerem Kraftniveau als die maximal zulässige Rahmenkraft absorbieren. Somit können Schädigungen der Karosserie vermieden werden, was mögliche Reparaturkosten erheblich senkt, bzw. vermeidet. Die Vorrichtung zur Aufpralldämpfung ist dabei gewöhnlich derart ausgestaltet, dass diese durch eine teilweise plastische Verformung die Aufprallenergie absorbiert, so dass bei einer Widerinstandsetzung des Kraftfahrzeuges nur die Vorrichtung zur Aufpralldämpfung und die Stoßfängeraußenhaut selbst ausgetauscht werden muss.

Um die Eindringtiefe eines Kollisionsgegenstands in das Fahrzeug zur Minimierung der Schadenshöhe zu reduzieren, ist es vorteilhaft, die energieabsorbierende Stoßfängerstruktur möglichst nahe an die Stoßfängeraußenhaut anzuordnen, wobei die Stoßfängeraußenhaut eine Kunststoffschale umfassen kann, welche nur einen vergleichsweise geringen Widerstand gegen das Eindringen eines Fremdkörpers bildet. Mit der Anordnung der energieaufnehmenden Komponenten nahe an der Stoßfängeraußenhaut kann eine Kollisionsenergie möglichst frühzeitig und auf maximalem Weg abgebaut werden, wodurch die Einwirkung auf den Fahrzeugrahmen und damit die Schadenshöhe reduziert bzw. minimiert werden kann. Insbesondere bei Aufpralltests zur Bestimmung der Versicherungseinstufung des Kraftfahrzeuges ist eine geringe Schadenshöhe wünschenswert, wobei zur Reduzierung der Teilevielfalt modellübergreifend gleiche Stoßfängersysteme bzw. energieabsorbierende Komponenten der Stoßfängersysteme eingesetzt werden. Auch innerhalb eines Modells eines Kraftfahrzeuges sind verschiedene Konturen der Stoßfängeraußenhaut beispielsweise zwischen einer geschlossenen und einer offenen Fahrzeugvariante möglich, so dass der Abstand zwischen dem Querträger bzw. den energieabsorbierenden Komponenten und der Stoßfängeraußenhaut variiert.

Dabei tritt das Problem auf, dass der Abstand der Stoßfängeraußenhaut zum Querträger bzw. zu den energieabsorbierenden Komponenten in Abhängigkeit der Fahrzeug- bzw. Modellvariante nicht minimal ist, und damit in einem Kollisionsfall keine maximale Energieaufnahme im Stoßfängersystem erfolgen kann. Eine aufwendige und die Teilevielfalt erhöhende Lösung wird bislang in der Anpassung der energieabsorbierenden Komponenten bzw. des Querträgers gesehen, wobei diese Lösung als kostenintensiv und nicht optimal angesehen werden muss.

Es ist daher die Aufgabe der vorliegenden Erfindung, eine Vorrichtung zur Aufpralldämpfung zu schaffen, mit welcher einerseits für unterschiedliche Ausbildungen der Stoßfängeraußenhaut der Abstand der energieabsorbierenden Komponenten bzw. des Querträgers optimierbar ist und andererseits die zwischen dem Querträger und dem Fahrzeugrahmen mögliche aufnehmbare Kollisionsenergie gesteigert werden kann.

Diese Aufgabe wird ausgehend von einer Vorrichtung zur Aufpralldämpfung gemäß dem Oberbegriff des Anspruchs 1 in Verbindung mit dessen kennzeichnenden Merkmalen gelöst. Vorteilhafte Weiterbildungen der Erfindung sind in den abhängigen Ansprüchen angegeben.

Die Erfindung schließt die technische Lehre ein, dass zwischen dem mindestens einen Prallelement und dem Fahrzeugrahmen wenigstens ein Adapterkörper angeordnet ist, wobei der Adapterkörper eine Dicke aufweist, über welche die Position des Querträgers relativ zur Stoßfängeraußenhaut über einen resultierenden Abstand vorgebbar ist, wobei der Adapterkörper weiterhin eine Rippenstruktur aufweist, um im Kollisionsfall durch eine Deformation im Adapterkörper eine Energieaufnahme zu ermöglichen, wobei der Adapterkörper rohrförmige Rippen umfasst, welche vorzugsweise in zumindest zwei sich gegenüberliegenden Seitenbereichen des Adapterkörpers angeordnet sind, und welche über Stege sowohl untereinander als auch mit den Längsrippen verbunden sind, welche die Seitenbereiche begrenzen, wobei die mittig im Adapterkörper ausgebildete Rippenstruktur als Kreuzrippenstruktur ausgebildet ist, welche zwischen den Längsrippen angeordnet ist.

Als Seitenbereiche sind die Außenbereiche des rechteckigen Adapterkörpers zu verstehen, wobei die rohrförmigen Rippen vorzugsweise in den Außenbereichen angeordnet sind. Diese sind entweder kreisrund oder elliptisch ausgeführt, wobei die rohrförmigen Rippen über Stege miteinander verbunden sind, und die Stege wiederum als gerade Rippen ausgebildet sind und eine steifigkeitserhöhende Funktion bieten. Um ein vorteilhaftes Deformationsverhalten des Adapterkörpers zu schaffen, ist die mittig im Adapterkörper ausgebildete Rippenstruktur als Kreuzrippenstruktur ausgebildet. Damit kann das Deformationsverhalten richtungsabhängig beeinflusst werden, wobei die Steifigkeit in Längsrichtung der Rippen größer ist als in einer senkrecht dazu angeordneten Richtung. Die Kreuzrippenstruktur kann als X-Struktur aufgefasst werden, wobei sich die Längsrichtung der X-Struktur zwischen den beiden Seitenbereichen erstreckt. Insgesamt können drei X-Strukturen nebeneinander angeordnet sein, wobei eine I-förmige Querrippe parallel zur Kreuzrippenstruktur ebenfalls zwischen den beiden Seitenbereichen eingesetzt sein kann.

Aus Steifigkeitsgründen ist es vorteilhaft, dass zwischen den rohrförmigen Rippen und den Kreuzrippen Längsrippen angeordnet sind, wobei die Kreuzrippen an die Längsrippen angebunden sind und die rohrförmigen Rippen über Stege mit den Längsrippen verbunden sind. Damit bilden die Längsrippen eine Begrenzung zwischen den Seitenbereichen und dem Mittenbereich, in dem die Kreuzrippen angeordnet sind. Die Längsrippen sind jeweils über Stege mit den rohrförmigen Rippen verbunden, wobei für eine einzelne rohrförmige Rippe entweder ein oder zwei Stege vorgesehen sein können. Die Stege und die Kreuzrippen sind dabei an jeweils gegenüberliegenden Stellen an die Längsrippen angebunden, so dass Längskräfte in den Rippen bzw. in den Stegen übergeleitet werden können, ohne die Längsrippen durch eine Querbelastung zu deformieren.

Diese Lösung bietet den Vorteil, dass in Abhängigkeit der Ausführungsvariante das Fahrzeugmodell bzw. verschiedene Fahrzeugmodelle gleiche Stoßfängersysteme umfassen können, wobei der Abstand, welcher zwischen der Stoßfängeraußenhaut und dem Querträger entsteht, über die Adapterplatte anpassbar ist. Somit kann die Stoßfängeraußenhaut verschiedene Konturen aufweisen, wobei der Abstand zum Querträger über die Dicke der Adapterplatte eingestellt werden kann. Folglich ist es möglich, modellübergreifend gleiche Stoßfängersysteme in das Fahrzeug zu integrieren. Die Adapterplatte kann im Heck des Fahrzeugs zweifach außenseitig angeordnet werden, da der Querträger vorzugsweise über zwei außenseitig oder nahe der Außenseite an der linken und rechten Fahrzeughinterseite über zwei Prallelemente mit dem Fahrzeugrahmen in Verbindung steht. Jedes Prallelement, welches eine energieabsorbierende Funktion aufweist, wird über einen Adapterkörper an den Fahrzeugrahmen befestigt. Der Adapterkörper kann dabei eine Grundfläche aufweisen, welche der Kontaktfläche zwischen dem Prallelement und dem Fahrzeugrahmen entspricht. Um die zwischen dem Querträger und dem Fahrzeugrahmen mögliche aufnehmbare Kollisionsenergie zu erhöhen, weist der Adapterkörper eine Rippenstruktur auf, um im Kollisionsfall durch eine Deformation im Adapterkörper eine Energieaufnahme zu ermöglichen, welche sich zu der Energieaufnahme der Prallelemente hinzuaddiert. Damit ist der Gesamtbetrag der aufnehmbaren Energie im Kollisionsfall höher, was eine weitere Reduzierung möglicher Schädigungen der Fahrzeugkarosserie bewirkt.

Eine mögliche Ausführungsform des Adapterkörpers sieht vor, dass dieser eine Grundplatte aufweist, von welcher sich die Rippenstruktur im Wesentlichen senkrecht erstreckt, wobei die Deformation überwiegend auf einer Formänderung in der Rippenstruktur beruht. Die Grundplatte bildet den Bodenbereich des im Wesentlichen hohl ausgeführten Adapterkörpers. Der Hohlraum bzw. Innenraum ist lediglich mit einer Rippenstruktur durchzogen, wobei sich die Rippenstruktur senkrecht von der Grundplatte erstreckt. Die Rippen der Rippenstruktur weisen eine konstante Höhe auf, so dass der Adapterkörper eine oberhalb abschließende Planfläche bildet. Der Adapterkörper kann sowohl grundplattenseitig als auch oberseitig in Richtung des Fahrzeugrahmens montiert werden. Aufgrund der auf Rippen aufgebauten Struktur ist eine Deformation des Adapterkörpers möglich, wobei die Deformation sowohl in orthogonaler Richtung zur Grundplatte als auch in einer Querrichtung dazu erfolgen kann, wobei in Querrichtung eine wesentlich geringere Steifigkeit aufgrund einer möglichen Knickbewegung der Rippenstruktur vorliegt. Die Formänderung der Rippenstruktur kann dabei in Abhängigkeit des Materials des Adapterkörpers entweder im plastischen oder im elastischen Bereich erfolgen. Im Kollisionsfall kann eine Krafteinwirkung über das Prallelement in den Adapterkörper in Querrichtung, d.h. in einer Richtung, welche in der Ebene der Grundplatte liegt, erfolgen, so dass die Rippen der Rippenstruktur seitlich wegknicken. Somit kann das Prallelement im Wesentlichen in Längsrichtung des Fahrzeugs Deformationsenergie absorbieren, wobei der Adapterkörper im Wesentlichen in Querrichtung zum Fahrzeug eine Deformationsenergie absorbiert.

Vorteilhafterweise umfasst der Adapterkörper eine Außenwandung, welche die Grundplatte umfangsseitig begrenzt, wobei die Außenwandung in gleicher Höhe mit der Rippenstruktur über der Grundplatte abschließt und mit dieser eine plane Ebene bildet. Die Außenwandung bildet die Außenfläche des Adapterkörpers, so dass dieser lediglich eine offene Seite aufweist, welche sich gegenüber der Grundplatte befindet. Damit ist die Umfangsfläche der rechteckigen Form bezüglich aller vier Seiten geschlossen, wobei die Grundplatte als geschlossene Rückseite aufgefasst werden kann. Im montierten Zustand des Adapterkörpers kann die offene Seite entweder in Richtung des Prallelements oder in Richtung des Fahrzeugrahmens montiert sein und an diesen angrenzen. Damit ist im montierten Zustand des Adapterkörpers die Rippenstruktur vollständig geschlossen. Die Außenwandung bildet zudem neben der Rippenstruktur einen tragenden Teil, sofern die mit dem Adapterkörper verbundene Grenzfläche diesen vollständig überdeckt. Die Höhe der Rippenstruktur und die Höhe der Außenwandung über der Grundplatte weisen den gleichen Betrag auf, so dass sowohl die Rippenstruktur als auch die Außenwandung eine abschließend plane Grenzfläche bilden.

Zur Befestigung des Adapterkörpers ist vorgesehen, dass die rohrförmigen Rippen Durchgangslöcher aufweisen, welche sich durch die Grundplatte erstrecken. Damit ist es möglich, die Vorrichtung zur Aufpralldämpfung durch eine Befestigung der Prallelemente an den Fahrzeugrahmen beispielsweise mittels einer Verschraubung zu schaffen. Die Verschraubung wird dabei durch den Adapterkörper hindurch geführt, so dass dieser fest zwischen dem Prallelement und dem Fahrzeugrahmen verankert wird. Die Verschraubung verläuft dabei durch die rohrförmigen Rippen hindurch, welche bodenseitig einen Durchbruch durch die Grundplatte aufweisen. Damit ist insgesamt ein Durchgang geschaffen, um eine Schraube oder ähnliche Befestigungsmittel wie eine Gewindestange oder einen Befestigungsschaft durch den Adapterkörper hindurchzuführen. Dieser kann insgesamt zehn rohrförmige Rippen aufweisen, wobei im jeweiligen Seitenbereich fünf Rippen angeordnet sind, wobei jede rohrförmige Rippe einen Durchbruch bzw. Durchgang im Bodenbereich aufweisen kann, um entsprechende Verbindungsmittel hindurchzuführen. Somit ermöglicht der Adapterkörper eine mehrfache Verschraubung des Prallelements mit dem Fahrzeugrahmen in jedem Seitenbereich. Die Verschraubung kann dabei sowohl fahrzeugrahmenseitig als auch von der Seite des Prallelements lediglich mit dem Adapterkörper erfolgen, um die Nachgiebigkeit des Adapterkörpers für den Kraftfluss zu nutzen. Durch eine durchgehende Verschraubung kann dieser besser als Nachgiebigkeitselement genutzt werden.

Aus fertigungstechnischen Gründen ist es von besonderem Vorteil, dass der Adapterkörper aus einem Material aus der Gruppe der Kunststoffe, umfassend glasfaserverstärktes Polyamid und bevorzugt 30 % glasfaserverstärktes Polyamid hergestellt ist, wobei der Adapterkörper vorteilhafterweise mittels eines Spritzgussverfahrens herstellbar ist. Bei Anwendung einer Spritzgusstechnologie zur Fertigung des aus Kunststoff hergestellten Adapterkörpers kann dieser einteilig ausgeführt sein, wobei die Komponenten des Adapterkörpers die Grundplatte, die Längsrippe, die rohrförmigen Rippen, die Stege zwischen den rohrförmigen Rippen und den Längsrippen, die Außenwandung sowie die Kreuzrippen an ihren jeweiligen Grenzbereichen ineinander übergehen. Die Übergänge zur Grundplatte können dabei rechtwinkelig mit einer spitzen Kehle ausgeführt sein oder Rundungen in der Kehle aufweisen, um ein Einreißen durch eine Kerbwirkung zu verhindern und den Spritzgussprozess zu optimieren. Neben einem 30 % glasfaserverstärkten Polyamid sind andere technische Kunststoffe einsetzbar, wobei die Härte des Materials die Höhe der aufnehmbaren Deformationsenergie bestimmt. In Abhängigkeit vom Anwendungsfall des Adapterkörpers kann dieser aus einem hochfesten Material hergestellt sein, um eine Deformation zu vermeiden oder zumindest so weit zu reduzieren, dass der Adapterkörper keine Aufprallenergie absorbiert. Damit übernimmt der Adapterkörper lediglich die Funktion, den Abstand zwischen der Stoßfängeraußenhaut und dem Querträger auszugleichen bzw. einzustellen. Dieser steifigkeitserhöhende Effekt kann auch dadurch erreicht werden, dass die Rippenstruktur des Adapterkörpers durch eine große Wandstärke der Rippen eine sehr hohe Steifigkeit aufweist, um den Eindringweg eines Fremdkörpers in die Vorrichtung zur Aufpralldämpfung bei einem Kollisionsfall zu begrenzen. Je größer die Wandstärke, d.h. je höher die Festigkeit bzw. die Steifigkeit der Rippenstruktur ist, desto höher sind die Deformationskräfte, welche der Adapterkörper ohne nennenswerte Deformation übertragen kann. Somit kann in Abhängigkeit des zulässigen Eindringweges eines Fremdkörpers, mit dem das Kraftfahrzeug bzw. die Vorrichtung zur Aufpralldämpfung kollidiert, über eine Steifigkeitsanpassung der Adapterplatte begrenzt werden.

Weitere, die Erfindung verbessernde Maßnahmen sind in den Unteransprüchen angegeben oder werden nachstehend gemeinsam mit der Beschreibung eines bevorzugten Ausführungsbeispiels der Erfindung anhand der Figuren näher dargestellt. Es zeigt:
Fig.1a ein Prinzipschnitt durch eine Vorrichtung zur Aufpralldämpfung im Heck eines Kraftfahrzeuges, wobei aufgrund des geringen Abstandes der Stoßfängeraußenhaut zum Querträger gemäß dem Stand der Technik kein Adapterkörper eingesetzt ist;
Fig.1b ein Prinzipschnitt durch eine Vorrichtung zur Aufpralldämpfung im Heck eines Kraftfahrzeuges, wobei ein Adapterstück mit einer kleinen Dicke eingesetzt ist;
Fig. 1c ein Prinzipschnitt durch eine Vorrichtung zur Aufpralldämpfung im Heck eines Kraftfahrzeuges, wobei ein Adapterkörper mit einer großen Dicke eingesetzt ist;
Fig.2 eine perspektivische Darstellung eines Ausführungsbeispiels eines Adapterkörpers mit einer Darstellung der Rippenstruktur; und
Fig.3 eine perspektivische Darstellung einer Vorrichtung zur Aufpralldämpfung mit einem Adapterkörper, welcher zwischen einem Querträger bzw.
einem Prallelement und einem Fahrzeugrahmen integriert ist.

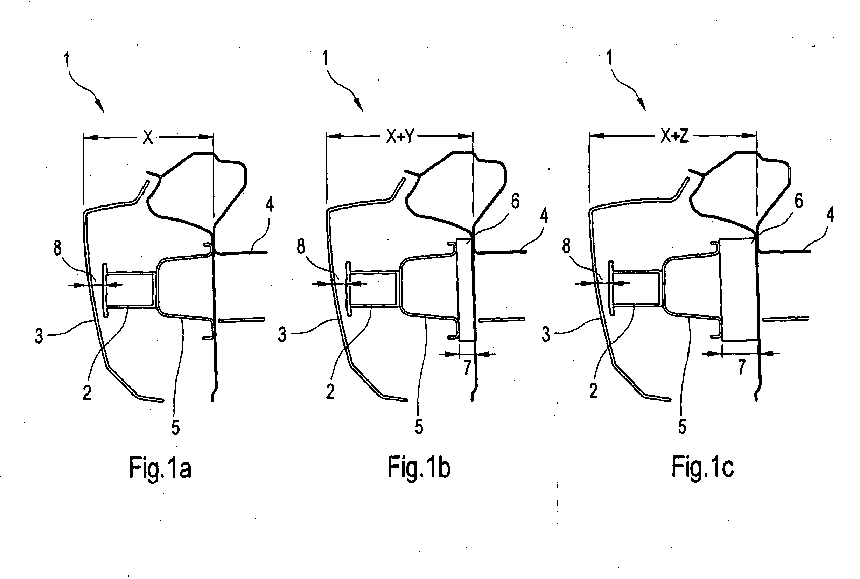

In den Figuren 1a-1c sind verschiedene Ausführungen einer Vorrichtung 1 zur Aufpralldämpfung im Heckbereich eines

Kraftfahrzeugs dargestellt. Diese umfasst zumindest eine Stoßfängeraußenhaut 3, hinter der sich mit einem Abstand 8 ein Querträger 2 befindet, der im Querschnitt dargestellt ist und welcher als Rechteckhohlprofil ausgebildet ist und sich über die Fahrzeugbreite erstreckt. Der Querträger 2 ist über zumindest ein Prallelement 5 mit dem Fahrzeugrahmen 4 verbunden, wobei in Fig.1a zwischen dem Prallelement 5 und dem Fahrzeugrahmen 4 -gemäß dem Stand der Technik- kein Adapterkörper angeordnet ist. Die Strecke X zwischen dem Fahrzeugrahmen 4 und der Hinterkante der Stoßfängeraußenhaut 3 führt zu einem Abstand 8, welcher sich zwischen der Innenseite der Stoßfängeraußenhaut 3 und dem Querträger 2 erstreckt. Die Geometrie des Querträgers 2 und des Prallelements 5 ist so gewählt, dass der resultierende Abstand 8 einen optimalen Wert annimmt. Die Strecke X der Außenkante der Stoßfängeraußenhaut 3 bis zum Fahrzeugrahmen 4 aus Fig.1a ist aufgrund der Geometrie des Stoßfängers 3 kleiner als mit einer Addition der mittleren Zusatzstrecke X + Y in Figur 1b bzw. der Addition der maximalen Zusatzstrecke X + Z in Fig.1c.

Die Geometrien des Querträgers 2 bzw. des Prallelements 5 sind so ausgelegt, dass ein optimaler Abstand 8 für den kürzesten Weg X der Stoßfängeraußenhaut 3 zum Fahrzeugrahmen 4 ohne Zusatzstrecken gebildet ist. Gemäß Fig.1b ist daher ein Adapterkörper 6 zwischen dem Fahrzeugrahmen 4 und dem Prallelement 5 angeordnet, um den größeren Abstand mit der Differenz Y der Außenseite der Stoßfängeraußenhaut 3 zum Fahrzeugrahmen 4 über die Dicke 7 des Adapterkörpers 6 auszugleichen. Dabei entspricht die Dicke 7 dem Wert Y, wobei die Geometrie des Prallelements 5 bzw. des Querträgers 2 unverändert bleibt. In Fig.1c ist eine weitere Vergrößerung der Strecke X zwischen der Außenseite der Stoßfängeraußenhaut 3 und dem Fahrzeugrahmen 4 um die maximale Zusatzstrecke Z dargestellt, so dass der Adapterkörper 6 eine Dicke 7 aufweist, welche dem Wert Z entspricht. Damit wird der Querträger 2 und das Prallelement 5 wiederum weiter nach außen versetzt, um den Abstand 8 zwischen dem Querträger 2 und der Innenseite der Stoßfängeraußenhaut 3 wiederherzustellen. Somit kann der Adapterkörper 6 zum Ausgleich des Abstandes 8 eingesetzt werden, wobei der Wert Y aus Fig.1b bzw. Z aus Fig.1c der Dicke 7 des Adapterkörpers 6 entspricht.

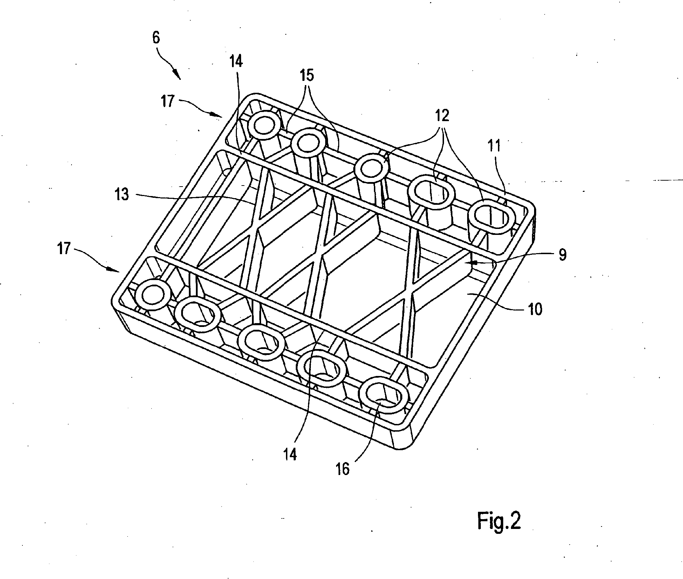

In Fig.2 ist ein Ausführungsbeispiel eines Adapterkörpers 6 gezeigt. Dieser ist perspektivisch dargestellt, wobei eine Rippenstruktur 9 erkennbar ist, welche dem Adapterkörper 6 eine definierte Steifigkeit verleiht. Die Rippenstruktur 9 umfasst in den Seitenbereichen 17 rohrförmige Rippen 12, welche über Stege 15 sowohl untereinander als auch mit Längsrippen 14 verbunden sind, welche die Seitenbereiche 17 begrenzen. Zwischen den Längsrippen 14 ist eine Kreuzrippenstruktur 13 angeordnet, welche X-förmig an die Längsrippen 14 angrenzen. Insgesamt kann der Adapterkörper 6 drei X-förmige Kreuzrippen 13 aufweisen, wobei diese asymmetrisch über der Breite des Adapterkörpers angeordnet sind und sich außenseitig eine weitere I-förmige Rippe zwischen den Längsrippen 14 erstreckt. Die Rippenstruktur 9 ermöglicht ein definierbares Deformationsverhalten, wobei bei einer Querkrafteinleitung in die Rippenstruktur 9 in diese eine plastische oder elastische Deformation eingeleitet wird. Um eine Befestigung des Prallelements 5 über dem Adapterkörper 6 mit dem Fahrzeugrahmen 4 zu ermöglichen (siele Fig. 1), weist der Adapterkörper 6 Durchgangslöcher 16 auf, welche sich durch die rohrförmigen Rippen 12 erstrecken. Diese bilden weiterhin einen Durchbruch durch die Grundplatte 10, welche den Adapterkörper 6 endseitig begrenzt. Somit weist der Adapterkörper 6 auf einer unteren Seite eine Grundplatte 10 auf, wobei die Rippenstruktur 9 auf der der Grundplatte 10 gegenüberliegenden Seite offen ausgeführt ist. Die Höhe der Rippenstruktur 9 bildet die Dicke 7 des Adapterkörpers 6 (in Fig.2 nicht dargestellt), um den Abstand 8 zwischen der Stoßfängeraußenhaut 3 und dem Querträger 2 zu regulieren (siehe Fig.1). Die Grundform des Adapterkörpers 6 entspricht gemäß dem vorliegenden Ausführungsbeispiel einer Rechteckform, wobei dieser ebenfalls quadratisch oder entsprechend als eine andere geometrische Ausführung ausgebildet sein kann. Die Rippenstruktur 9, welche sowohl die Kreuzrippenstruktur 13, die rohrförmigen Rippen 12 sowie die Längsrippen 14 umfassen kann, ist insgesamt miteinander verbunden. Die Verbindung der einzelnen Rippenstrukturen untereinander ist so ausgeführt, dass bei einer Deformation des Adapterkörpers 6 innerhalb der Rippenstruktur 9 ein Kraftfluss erzeugt wird, welcher ohne lokale Überbeanspruchung einzelner Rippenbereiche innerhalb der verschiedenen Rippenstrukturen übergehen kann. Beispielsweise sind die Anbindungsstellen der Kreuzrippenstruktur 13 und der Stege 15 an die Längsrippen 14 auf gleicher Höhe angeordnet, um in die Längsrippen 14 keine einseitigen Biegebelastungen einzuleiten.

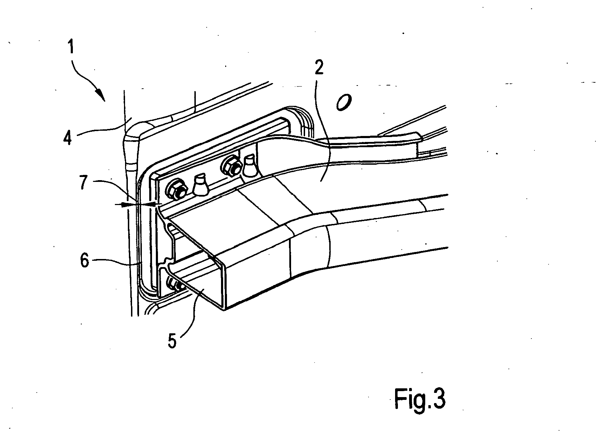

Fig.3 zeigt eine perspektivische Ansicht einer Vorrichtung 1 zur Aufpralldämpfung, wobei ein Querträger 2 zumindest teilweise gezeigt ist, welcher über ein integriertes Prallelement 5 an einen Adapterkörper 6 angeschraubt ist. Die Verschraubung kann dabei durch den Adapterkörper 6 hindurchgeführt sein, wobei die Verbindung mit dem Fahrzeugrahmen 4 hergestellt ist. Der Adapterkörper 6 weist eine Dicke 7 auf, welche den Abstand zwischen dem Fahrzeugrahmen 4 und der flanschförmigen Befestigungsfläche des Prallelements 5 wiedergibt. Die flanschförmige Befestigungsfläche des Prallelements 5 weist gemäß dem vorliegenden Ausführungsbeispiel eine rechteckige Kontaktfläche auf, wobei die Größe des Adapterkörpers 6 der Kontaktfläche des Prallelements 5 angepasst ist.

Die Erfindung beschränkt sich in ihrer Ausführung nicht auf das vorstehend angegebene Ausführungsbeispiel. Es ist eine Mehrzahl von Varianten denkbar, welche von der dargestellten Varianten auch bei grundsätzlich anders gearteten Ausführungen Gebrauch macht.

### Bezugszeichenliste

- **1**: Vorrichtung
- **2**: Querträger
- **3**: Stoßfängeraußenhaut
- **4**: Fahrzeugrahmen
- **5**: Prallelement
- **6**: Adapterkörper
- **7**: Dicke
- **8**: Abstand
- **9**: Rippenstruktur
- **10**: Grundplatte
- **11**: Außenwandung
- **12**: rohrförmige Rippen
- **13**: Kreuzrippenstruktur
- **14**: Längsrippen
- **15**: Steg
- **16**: Durchgangslöcher
- **17**: Seitenbereich

- **X**: Strecke
- **Y**: mittlere Zusatzstrecke
- **Z**: maximale Zuatzstrecke

## Patentansprüche

1. Vorrichtung **(1)** zur Aufpralldämpfung, insbesondere für ein Kraftfahrzeug mit einem Querträger **(2),** welcher sich vorzugsweise zwischen einer Stoßfängeraußenhaut **(3)** und einem Fahrzeugrahmen **(4)** erstreckt, wobei der Querträger **(2)** mittels zumindest einem Prallelement **(5)** am Fahrzeugrahmen **(4)** angeordnet ist, welcher im Kollisionsfall des Kraftfahrzeugs eine energieabsorbierende Funktion aufweist, wobei zwischen dem mindestens einen Prallelement **(5)** und dem Fahrzeugrahmen **(4)** wenigstens ein Adapterkörper **(6)** angeordnet ist, wobei der Adapterkörper **(6)** eine Dicke **(7)** aufweist, über welche die Position des Querträgers **(2)** relativ zur Stoßfängeraußenhaut **(3)** über einen resultierenden Abstand **(8)** vorgebbar ist, **dadurch gekennzeichnet, dass** der Adapterkörper (6) weiterhin eine Rippenstruktur **(9)** aufweist, um im Kollisionsfall durch eine Deformation im Adapterkörper **(6)** eine Energieaufnahme zu ermöglichen, wobei der Adapterkörper **(6)** rohrförmige Rippen **(12)** umfasst, welche vorzugsweise in zumindest zwei sich gegenüberliegenden Seitenbereichen **(17)** des Adapterkörpers **(6)** angeordnet sind und welche über Stege **(15)** sowohl untereinander als auch mit Längsrippen **(14)** verbunden sind, welche die Seitenbereiche **(17)** begrenzen, und wobei die mittig im Adapterkörper **(6)** ausgebildete Rippenstruktur **(9)** als Kreuzrippenstruktur **(13)** ausgebildet ist, welche zwischen den Längsrippen **(14)** angeordnet ist.

2. Vorrichtung **(1)** zur Aufpralldämpfung nach Anspruch 1, **dadurch gekennzeichnet, dass** der Adapterkörper **(6)** eine Grundplatte **(10)** aufweist, von welcher sich die Rippenstruktur **(9)** im Wesentlichen senkrecht erstreckt, wobei die Deformation überwiegend auf einer Formänderung in der Rippenstruktur **(9)** beruht.

3. Vorrichtung **(1)** zur Aufpralldämpfung nach Anspruch 1 oder 2,
**dadurch gekennzeichnet, dass** der Adapterkörper **(6)** eine Außenwandung **(11)** umfasst, welche die Grundplatte **(10)** umfangsseitig begrenzt, wobei die Außenwandung **(11)** in gleicher Höhe mit der Rippenstruktur **(9)** über der Grundplatte **(10)** abschließt und mit dieser eine plane Ebene bildet.

4. Vorrichtung **(1)** zur Aufpralldämpfung nach einem der vorgenannten Ansprüche,
**dadurch gekennzeichnet, dass** die rohrförmigen Rippen (12) Durchgangslöcher (16) aufweisen, welche sich durch die Grundplatte (10) erstrecken.

5. Vorrichtung **(1)** zur Aufpralldämpfung nach einem der vorgenannten Ansprüche,
**dadurch gekennzeichnet, dass** der Adapterkörper **(6)** aus einem Material aus der Gruppe der Kunststoffe, umfassend glasfaserverstärktes Polyamid und bevorzugt 30% glasfaserverstärktes Polyamid hergestellt ist.

6. Vorrichtung **(1)** zur Aufpralldämpfung nach einem der vorgenannten Ansprüche,
**dadurch gekennzeichnet, dass** der Adapterkörper **(6)** mittels eines Spritzgussverfahrens herstellbar ist.

7. Vorrichtung **(1)** zur Aufpralldämpfung nach einem der vorgenannten Ansprüche,
**dadurch gekennzeichnet, dass** die Rippenstruktur **(9)** des Adapterkörpers **(6)** durch eine große Wandstärke der Rippen eine sehr hohe Steifigkeit aufweist, um den Eindringweg eines Fremdkörpers in die Vorrichtung **(1)** zur Aufpralldämpfung bei einem Kollisionsfall zu begrenzen.

## Claims

1. An apparatus (1) for impact absorption, especially for a motor vehicle with a cross member (2) extending preferably between the external bumper skin (3) and a vehicle frame (4), with the cross member (2) being arranged on the vehicle frame (4) by means of at least one impact element (5) which has an energy-absorbing function in case of collision of the motor vehicle, with at least one adapter body (6) being arranged between the at least one impact element (5) and the vehicle frame (4), with the adapter body (6) having a thickness (7), by means of which the position of the cross member 2) can be predetermined relative to the external bumper skin (3) via a resulting distance (8), **characterized in that** the adapter body (6) further has a rib structure (9) in order to enable energy absorption in the case of collision by a deformation in the adapter body (6), with the adapter body (6) comprising tubular ribs (12) which are preferably arranged in at least two opposite side areas (17) of the adapter body and which are connected via webs (15) both among one another and also with longitudinal ribs (14) which delimit the side areas (17), and with the rib structure (9), which is arranged centrally in the adapter body (6), being arranged as a cross-rib structure (13) which is arranged between the longitudinal ribs (14).

2. An apparatus (1) for impact absorption according to claim 1, **characterized in that** the adapter body (6) has a base plate (10), from which the rib structure (9) extends in a substantially perpendicular way, with the deformation being based mainly on a change in form in the rib structure (9).

3. An apparatus (1) for impact absorption according to claim 1 or 2, **characterized in that** the adapter body (6) comprises an outside wall (11) which delimits the base plate (10) on the circumferential side, with the outside wall (11) ending at the same height as the rib structure (9) above the base plate (10) and forming a flat plane with the same.

4. An apparatus (1) for impact absorption according to one of the preceding claims, **characterized in that** the tubular ribs (12) have through-holes (16) which extend through the base plate (10).

5. An apparatus (1) for impact absorption according to one of the preceding claims, **characterized in that** the adapter body (6) is made of a material from the group of plastics, comprising glass-fiber-reinforced polyamide and preferably 30% glass-fiber-reinforced polyamide.

6. An apparatus (1) for impact absorption according to one of the preceding claims, **characterized in that** the adapter body (6) can be made by means of an injection-molding method.

7. An apparatus (1) for impact absorption according to one of the preceding claims, **characterized in that** the rib structure (9) of the adapter body (6) has a very high stiffness through a large wall thickness of the ribs in order to limit the penetration path of a foreign body into the apparatus (1) for impact absorption in the case of collision.

## Revendications

1. Dispositif (1) pour l'amortissement des chocs, en particulier pour un véhicule à moteur avec une traverse (2) qui s'étend de préférence entre une enveloppe extérieure de pare-chocs (3) et un châssis de véhicule (4), laquelle traverse (2) est disposée sur le châssis de véhicule (4) au moyen d'au moins un élément anticollision (5) qui présente une fonction d'absorption de l'énergie en cas de collision du véhicule, un élément adaptateur (6) étant disposé entre l'au moins un élément anticollision (5) et le châssis de véhicule (4), l'élément adaptateur (6) ayant une épaisseur (7) par laquelle la position de la traverse (2) par rapport à l'enveloppe extérieure du pare-chocs (3) peut être prédéterminée par une distance (8) en résultant, **caractérisé en ce que** l'élément adaptateur (6) présente en outre une structure nervurée (9) afin de permettre une absorption d'énergie en cas de collision par une déformation dans l'élément adaptateur (6), l'élément adaptateur (6) comportant des nervures tubulaires (12) qui sont de préférence disposées dans au moins deux parties latérales (17) se faisant face de l'élément adaptateur (6) et qui sont reliés par des entretoises (15) aussi bien entre elles qu'avec des nervures longitudinales (14) qui délimitent les parties latérales (17), et la structure de nervures (9) formée au milieu de l'élément adaptateur (6) étant conformée comme une structure de nervures en croix (13) quoi est disposée entre les nervures longitudinales (14).

2. Dispositif (1) pour l'amortissement des chocs selon la revendication 1, **caractérisé en ce que** l'élément adaptateur (6) présente une plaque de base (10) à partir de laquelle la structure de nervures (9) s'étend de façon sensiblement verticale, la déformation dépendant principalement d'un changement de forme de la structure de nervures (9).

3. Dispositif (1) pour l'amortissement des chocs selon la revendication 1 ou 2, **caractérisé en ce que** l'élément adaptateur (6) comprend une paroi extérieure (11) qui délimite la plaque de base (10) sur sa circonférence, laquelle paroi extérieure (11) finit à la même hauteur que la structure de nervures (9) au-dessus de la plaque de base (10) et forme un plan avec celle-ci.

4. Dispositif (1) pour l'amortissement des chocs selon l'une des revendications précédentes, **caractérisé en ce que** les nervures tubulaires (12) présentent des trous traversants (16) qui s'étendent à travers la plaque de base (10).

5. Dispositif (1) pour l'amortissement des chocs selon l'une des revendications précédentes, **caractérisé en ce que** l'élément adaptateur (6) est fait d'un matériau appartenant au groupe des matières plastiques, comprenant du polyamide armé de fibres de verre et de préférence du polyamide armé avec 30 % de fibres de verre.

6. Dispositif (1) pour l'amortissement des chocs selon l'une des revendications précédentes, **caractérisé en ce que** l'élément adaptateur (6) peut être fabriqué au moyen d'un procédé de moulage par injection.

7. Dispositif (1) pour l'amortissement des chocs selon l'une des revendications précédentes, **caractérisé en ce que** la structure de nervures (9) de l'élément adaptateur (6) présente grâce à l'épaisseur de paroi importante des nervures une très grande rigidité, afin de limiter la distance de pénétration d'un corps étranger dans le dispositif (1) pour l'amortissement des chocs en cas de collision.
